# EUROPÄISCHE PATENTSCHRIFT

(11) **EP 2 878 833 B1**
(45) Veröffentlichungstag und Bekanntmachung des Hinweises auf die Patenterteilung: **19.04.2017**
(21) Anmeldenummer: 13195049.5
(22) Anmeldetag: 29.11.2013
(51) Int. Cl.: F16B 12/24, E06B 1/04

(54) **Magnetische Elementverbindung**
Magnetic element connector
Liaison d'éléments magnétique

(43) Veröffentlichungstag der Anmeldung: 03.06.2015
(73) Patentinhaber: Tischlerei Netzer GmbH & Co KG, 6793 Gaschurn (AT)
(72) Erfinder:
(74) Vertreter: Allwardt, Anke

(56) Entgegenhaltungen:
- CN-U- 202 457 379
- DE-A1-102012 000 027
- DE-U1-202012 003 243
- US-A1- 2007 287 353

## Beschreibung

Die vorliegende Erfindung betrifft eine Verbindungseinrichtung, welche ein festes aber lösbares Verbinden von verschiedenen Einzelsegmenten miteinander zu einer gefügten Einheit erlaubt, insbesondere das feste aber lösbare Verbinden von Möbelsegmenten zur Bildung eines Regals, Schranks oder Bettes oder von Türen bzw. Türrahmen oder Fenstern bzw. Fensterrahmen mit einem Türband, Fensterband bzw. einem Beschlag.

Bisher wird ein solches Verbinden im Bereich von Möbeln, Türen und Fenstern in der Regel durch Schraubverbindungen hergestellt. Zum Erstellen wie auch zum Lösen dieser festen, lösbaren Verbindungen benötigt man jeweils Werkzeug, das zudem auf die jeweiligen Schrauben bzw. Muttern abgestimmt sein muss. Ausserdem muss der Schraubenkopf bzw. die Mutter zum Lösen der Verbindung zugänglich sein, woraus meist eine ästhetisch unbefriedigende Lösung resultiert. Ebenfalls bekannt sind Verriegelungen, bei denen ein erstes Verbindungselement, meist eine Schraube oder ein Stift, so mit einem ersten Bauteil verbunden ist, dass es mit einem Abschnitt über das Bauteil hinausragt. Dieser überstehende Abschnitt des ersten Verbindungselements greift in ein an einem zweiten Bauteil angeordneten zweites Verbindungselement, das als Verriegelungselement ausgebildet ist, ein und kann durch Verschieben oder Verdrehen eines der beiden Verbindungselemente verriegelt und auch wieder gelöst werden. Aber auch hierzu muss eines der beiden Verbindungselemente zugänglich sein, mit dem entsprechenden ästhetischen Nachteil.

Um diesen Nachteil zu umgehen, sind Verriegelungselemente vorgeschlagen worden, welche durch magnetische Felder bewegt und von einer unverriegelten in eine verriegelte Position und zurück bewegbar sind. Aber auch hierfür wird ein passendes Werkzeug benötigt, mit dem das entsprechende Magnetfeld erzeugt werden kann.

Aus der WO 2011/065736 A1 ist ein Tisch bekannt, in dessen Tischplatte Vertiefungen eingelassen sind, in welche Permanentmagnete eingesetzt werden können. Das Gestell, auf dem die Tischplatte ruhen soll, ist entweder selber metallisch, so dass über die in die Vertiefungen eingesetzten Magnete eine magnetische Verbindung mit dem Gestell hergestellt wird, oder aber im Gestell sind an passendem Ort metallische Teile mit dem Gestell verbunden, die für die magnetische Verbindung sorgen. Für das Verbinden der Tischplatte mit dem Gestell wird somit kein Werkzeug benötigt. Nachteilig ist hier, dass die Tischplatte zwar durch die Magnete senkrecht auf dem Gestell fixiert ist. Sind die Magnetkräfte aber so gering, dass diese Verbindung ohne Werkzeug und grossen Kraftaufwand wieder lösbar ist, so ist die Tischplatte gegenüber dem Gestell seitlich verschiebbar. Sind aber die Magnetkräfte so gross, das auch ein seitliches Verschieben der Tischplatte gegenüber dem Gestell verhindert wird, so ist die Verbindung nicht mehr ohne grossen Kraftaufwand und ohne Werkzeug lösbar.

Dokument CN202457379 (U) offenbart ein Verbindungssystem für das Verbinden von einzelnen Sofakomponenten miteinander, wie beispielsweise von Sofafüssen mit einem Sofa oder zweier Rückenlehnen miteinander. Das Verbindungssystem umfasst eine Verbindungsstange und zwei Verbindungshülsen. Die Verbindungshülsen sind eingebettet in zwei einen gegenüber angeordneten Komponenten des Sofas und die Verbindungsstange wird verbindend in die beiden Verbindungshülsen eingesetzt. Die Verbindungshülsen sind mit magnetischen Blöcken versehen, welche auf der Seite der Sofakomponente in selbige eingebracht sind; während die beiden Endend der Verbindungsstange Eisen-, Kobalt-, Nickelkomponenten umfassen.

Aus dem Dokument CA 2101837 ist eine Magnetverbindung bekannt, die zwei zylindrische, nichtmagnetische und nicht magnetisierbare Hülsen umfasst, wobei in jeder der beiden Hülsen zwei Magnetelemente vorgesehen sind. Jeweils die Innendurchmesser und die Aussendurchmesser der beiden Hülsen sind identisch. Die beiden Magnetelemente sind jeweils als Halbzylinder ausgestaltet und liegen in den Hülsen angeordnet mit ihren flachen Seiten bündig aufeinander, so dass sie einen Vollzylinder bilden, dessen Aussendurchmesser passend zum Innendurchmesser der Hülse gestaltet ist. Die halbzylindrischen Magnetelemente weisen zwei einander gegenüberliegende Stirnseiten auf, wovon eine einen Nordpol und die gegenüberliegende Stirnseite einen Südpol bildet, so dass die magnetischen Feldlinien sich jeweils von Stirnseite zu Stirnseite erstrecken. Die beiden halbzylindrischen Magnetelemente liegen mit ihren flachen Seiten derart aufeinander, dass jeweils ein Nordpol und ein Südpol aufeinanderliegen und sich das magnetische Feld stirnseitig neutralisiert. Die erste Hülse ist so ausgebildet, dass die in ihr angeordneten Magnetelemente um eine Länge A aus der Hülse herausragen. Die zweite Hülse ist dagegen so ausgebildet, dass sie die in ihr angeordneten Magnetelemente um die Länge A überragt, so dass diese eine Aufnahmeöffnung der Länge A für die Magnetelemente der anderen Hülse bildet. Zur Herstellung einer festen Verbindung zwischen zwei Objekten, wird jedes der beiden Objekte mit einer der beiden Hülsen versehen und die überstehenden Magnetelemente der einen Hülse in die Aufnahmeöffnung der anderen Hülse eingeführt. Dabei werden die Magnetelemente so gedreht, dass eine Südpolstirnseite auf eine Nordpolstirnseite trifft und die Magnetelemente einander anziehen. Zum Lösen der Verbindung werden die Magnetelemente wenigstens einer Hülse so verdreht, dass Nordpolstirnseite auf Nordpolstirnseite trifft und Südpolstirnseite auf Südpolstirnseite. Die Pole stossen einander jetzt ab, und die Objekte können voneinander getrennt werden. Um die Magnetelemente zu drehen, benötigt man aber wieder entweder ein Werkzeug, das ein äusseres Magnetfeld erzeugt oder aber einen Zugriff von Aussen, was die entsprechenden ästhetischen Nachteile mit sich bringt.

Das hier vorgeschlagene Verbindungssystem will hier Abhilfe schaffen. und das lösbare Verbinden von Bauteilen werkzeugfrei ermöglichen.

Gemeinsam ist den meisten dieser Verbindungssysteme, dass in den miteinander zu verbindenden Komponenten einer zu fügenden Einheit Öffnungen bzw. Ausnehmungen eingearbeitet sein müssen, welche dazu dienen magnetische oder magnetisierbare Verbindungselemente und/oder Verbindungsglieder des Verbindungssystems aufzunehmen. Damit ein Verbindungssystem die best mögliche Anziehungskraft entfaltet, sollten magnetische und magnetisierbare Bereiche bzw. magnetische Bereiche von Verbindungsglied und Verbindungselement einander berühren. Ungenauigkeiten in den axialen Ausdehnungen der Öffnungen bzw. Ausnehmungen von zu verbindenden Komponenten können aber dazu führen, dass der Abstand zu gross ist, und es daher nicht zu einer solchen Berührung kommt. Solche Ungenauigkeiten können insbesondere bei Erstellung von Öffnungen und Ausnehmungen vor Ort, z.B. auf einer Baustelle, vorkommen, wenn diese von Hand und nicht maschinell gefertigt werden.

Darüber hinaus ist es eine weitere Aufgabe der Erfindung, Segmente bereitzustellen, die mittels des Verbindungssystems einfach, fest aber lösbar miteinander verbindbar sind, sowie gefügte Einheiten bereitzustellen, die mittels eines solchen Verbindungssystems aus derartigen Segmenten gefügt sind.

Solche gefügten Einheiten können aus der Gruppe folgender Einheiten stammen: Möbel, Türen, Fenster.

Mindestens eine dieser Aufgaben wird in erfindungsgemässer Weise durch ein Verbindungssystem gemäss Anspruch 1, oder eine gefügte Einheit gemäss Anspruch 12 gelöst. Vorteilhafte Ausgestaltungen der Erfindung finden sich jeweils in den abhängigen Ansprüchen. Ein Verbindungssystem zum festen aber lösbaren Verbinden von Einzelsegmenten zu verbundenen Einheiten ist mit wenigstens einem versenkt und fest in einer Ausnehmung eines ersten Einzelsegments anordenbaren ersten Verbindungselement und mit einem ebenfalls für ein Eingreifen in die genannte Ausnehmung ausgelegten Verbindungsglied ausgestattet. Das Verbindungsglied wirkt dabei mit dem ersten Verbindungselement magnetisch zusammen, wobei das Verbindungselement oder das Verbindungsglied bzw. zumindest ein Teil des Verbindungsglieds als magnetisches Element ausgebildet ist und das andere mit diesem zusammenwirkende Verbindungselement bzw. Verbindungsglied oder Teil des Verbindungsglieds entweder ebenfalls ein magnetisches Element, insbesondere ein gegenpolig magnetisches Element, oder ein magnetisierbares Element ist. Erfindungsgemäss weist das Verbindungssystem ein zweites Verbindungselement auf, das versenkt in einer Öffnung eines zweiten Einzelsegments fest anordenbar ist, wobei das Verbindungsglied auch zum Eingreifen in die Öffnung und zum magnetischen Zusammenwirken mit dem zweiten Verbindungselement ausgebildet ist, so dass es mit dem ersten und dem zweiten Verbindungselement eine magnetische Wirkverbindung eingeht, welche in einer gegenseitigen Anziehung zwischen dem jeweiligen Verbindungselement und dem Verbindungsglied resultiert.

Bei den gefügten Einheiten, kann es sich um Möbel, Türen oder Fenster handeln.

Da das Verbindungsglied in die Ausnehmung und die Öffnung eingreift, in denen die mit ihm magnetisch zusammenwirkenden Verbindungselemente versenkt fixiert sind, Können die Einzelsegmente nicht gegeneinander verschoben werden. Die Fixierung der Einzelsegmente wird also einerseits durch die in Verbindungsrichtung wirkende magnetische Kraft bewirkt und quer dazu durch die blockierende Wirkung des die Scherkräfte aufnehmenden Verbindungsgliedes.

Da die Verbindungselemente versenkt und fest in Öffnungen und Ausnehmungen der Einzelsegmente angeordnete sind, sind diese in der Regel nicht sichtbar. Für die Lagerung und den Transport werden die mit den Verbindungselementen versehenen Einzelsegmente und die Verbindungsglieder separat aufbewahrt und transportiert. Die Einzelsegmente weisen somit keinerlei hervorstehende oder aus ihnen herausragende Elemente auf, wodurch die Einzelsegmente gut lagerbar und transportierbar sind, ohne dass irgendwelche Teile des Verbindungssystems die Einzelsegmente beschädigen oder verkratzen könnten und ohne dass Teile des Verbindungssystems selbst beschädigt oder abgebrochen werden könnten.

Ist die Länge des Verbindungsglied in Verbindungsrichtung so bemessen ist, dass nach dem Verbinden die Einzelsegmente spaltfrei über die Magnetkräfte zusammengehalten werden, so liegt das Verbindungssystem nach erfolgtem Verbinden der Einzelsegmente völlig verdeckt und ist von aussen nicht sichtbar. Vorteilhaft wird durch ein solches Verdecktliegen des Verbindungssystems das optische Erscheinungsbild der Einzelsegmente, bzw. der aus diesen zusammengesetzten gefügten Einheiten, insbesondere Möbel, produktaufwertend veredelt. Die Länge des Verbindungsgliedes entspricht dabei idealerweise der Tiefe der Ausnehmung im ersten Einzelsegment plus der Tiefe der Öffnung im zweiten Einzelsegment minus einer in Verbindungsrichtung betrachteten Ausdehnung eines stirnseitig zwischen einem Boden der Öffnung bzw. Ausnehmung und einer Stirnseite des Verbindungsglieds angeordneten Teils eines ersten Verbindungselements und eines zweiten Verbindungselements. Ist die Länge des Verbindungsgliedes länger als dies, ist eine spaltfreie Fügung nicht möglich; ist sie kürzer als dies, so nimmt die magnetische Haltekraft zwischen den Einzelsegmenten um so mehr ab, je größer die Distanz zwischen den magnetisch zusammenwirkenden Teilen von Verbindungselementen und Verbindungsglied ist.

Das Verbindungssystem kann aber auch mit fugenbildenden Mitteln ausgestattet sein, welche ein Zusammenfügen von Einzelelementen nur unter Bildung einer Fuge bzw. eines Spalts definierter Breite zwischen den Einzelelementen erlauben. Solche Mittel können beispielsweise Flansche einer definierten Dicke sein, die zu den versenkt in Ausnehmungen bzw. Öffnungen von Einzelelementen fixierbaren Verbindungselementen gehören - z.B. einstückig mit diesen ausgebildet sind - und die bei versenkt fixiertem Verbindungselement am Rande der Öffnung bzw. Ausnehmung auf dem Einzelsegment aufliegen. Eine anderes solches Mittel kann zum Beispiel auch eine Wulst definierter axialer Ausdehnung an dem Verbindungsglied sein, die radial nach aussen über die Öffnung bzw. die Ausnehmung, in welche das Verbindungsglied eingreift hinausragt und so die beiden Einzelelemente mit einem Spalt definierter Breite in Distanz zueinander hält. Der Spalt bzw. die Fuge ist dann so breit, wie die axiale Ausdehnung der Wulst. Die Wulst kann dabei eine umlaufende Ringwulst oder segmentiert umlaufend ausgebildet sein.

Sind Öffnungen und Ausnehmungen der ersten und zweiten Einzelelemente aufeinander abgestimmt und auch auf die nach der Verbindung gewünschte Anordnung der Einzelelemente zueinander, so minimiert sich der Montageaufwand und die Montage wird werkzeuglos und auch für Laien ohne große Anleitung möglich.

Sind die Verbindungselemente magnetische Elemente - wobei das erste Verbindungselement gegenpolig oder gleichpolig magnetisch zum zweiten Verbindungselement sein kann - und die Verbindungselemente bzw. die relevanten äusseren Teile des oder der Verbindungsglieder magnetisierbar oder sind umgekehrt die Verbindungselemente magnetisierbar und das Verbindungsglied bzw. die Verbindungsglieder sind zumindest jeweils stirnseitig magnetisch, so kann eine mit diesem Verbindungssystem zusammensetzbare gefügte Einheit aus sehr flexibel einsetzbaren Einzelsegmenten zusammengesetzt werden. Den in diesem Fall sind Einzelsegmente mit gleichen Abmessungen beliebig in der gefügten Einheit verwendbar, da sie nicht durch die Anordnung von Verbindungsstreben oder Verbindungszapfen für Verwendung an einem bestimmten Ort in der Einheit vordefiniert sind. Ein solches Verbindungssystem erhöht somit gegenüber dem Stand der Technik die Flexibilität in Bezug auf die Kombinierbarkeit der einzelnen Segmente.

In einer anderen Ausführungsform sind die Verbindungselemente magnetische Elemente, und das Verbindungsglied weist zumindest jeweils stirnseitig magnetisches Material auf, das in seiner Polung jeweils so gewählt ist, dass es mit den magnetischen Verbindungselementen eine einander anziehende Magnetwirkung entfaltet, insbesondere also gegenpolig zu dem jeweiligen Verbindungselement ausgebildet ist. Auf diese Weise lassen sich wo erforderlich grössere Magnetfeldstärken für die gegenseitige Anziehung realisieren.

Um die hohe Flexibilität des Systems beizubehalten ist es bei einem solchen System vorteilhaft, wenn das Verbindungsglied magnetische Stirnseiten aufweist, welche durch ein nicht magnetisches und nichtmagnetisierbares Zwischenstück voneinander getrennt sind, und welche die gleiche Polung aufweisen. Das Verbindungslied weist somit auf beiden Stirnseiten beispielsweise Nordpole oder auf beiden Seiten Südpole auf, die durch ein nichtmagnetisches Zentralstück voneinander getrennt sind. Alle Verbindungselemente weisen entsprechend gegenpolige Magnete auf, also entweder jeweils alle Südpole oder jeweils alle Nordpole. Mit anderen Worten die ersten Verbindungselemente sind gleichpolig mit den zweiten Verbindungselementen ausgebildet und gegenpolig zum Verbindungsglied.

In einer Ausführungsform des Verbindungssystems weist das Verbindungsglied an den Stirnseiten jeweils die grösste Magnetfeldstärke auf und irgendwo in einem mittleren Bereich die geringste Magnetfeldstärke, wobei dies vorzugsweise die Mitte zwischen den Stirnseiten ist und/oder dort insbesondere der Polumkehrpunkt liegt. Die Magnetfeldstärke kann dabei entweder abschnittsweise von der Stirnseite gegen den mittleren Bereich hin geringer werden oder einen kontinuierlichen Magnetfeldstärke-Gradienten aufweisen.

Die erfingungsgemässe Ausführungsform des Verbindungssystems ist dadurch gekennzeichnet, dass das Verbindungsglied zwischen seinen magnetischen oder magnetisierbaren Stirnseiten ein Zwischenstück (auch Zentralstück genannt) aufweist, wobei die magnetischen oder magnetisierbaren Stirnseiten durch einen Abstand A voneinander beabstandet sind, wobei der Abstand variabel einstellbar ist und eine minimale Länge L aufweist. Das Zwischenstück ist derart aufgebaut, dass es eine Einstellung des variablen Abstandes A zwischen den magnetischen oder magnetisierbaren Stirnseiten von der minimalen Länge L bis zu einer maximalen Länge L' ermöglicht, wobei die maximale Länge L', die bis zu 15% länger ist als die minimale Länge L, besser bis zu 50% der länger ist als die minimale Länge L.

Mit einem solchen Zwischenstück können Ungenauigkeiten in den axialen Ausdehnungen der Öffnungen bzw. Ausnehmungen ausgeglichen werden. Solche Ungenauigkeiten können insbesondere bei Erstellung von Öffnungen und Ausnehmungen vor Ort, z.B. auf einer Baustelle, vorkommen, wenn diese von hand und nicht maschinell gefertigt werden. Damit das Verbindungsglied im Zusammenwirken mit den Verbindungselementen die best mögliche Anziehungskraft entfaltet, sollten die magnetische und magnetisierbare Bereiche bzw. die magnetischen Bereiche von Verbindungsglied und Verbindungselement einander berühren. Kann die Länge des Verbindungsglieds mittels des Zwischenstücks eingestellt werden, so kann auch bei Ungenauigkeiten in der Tiefe bzw. der axialen Ausdehnung von Öffnungen und Ausnehmungen dieser Kontakt realisiert werden.

Das Zwischenstück/Zentralstück kann beispielsweise als in Verbindungsrichtung dehnbar-elastisches Kunststoffelement oder als Schraube oder als Federelement ausgebildet sein, insbesondere als Schraubenfeder, die z.B. mittels einer folienartigen dehnbarelastischen Kunststoffhülse geschützt ist.

In einer weiteren Ausführungsform sind das Verbindungsglied, das erste Verbindungselement und/oder das zweite Verbindungselement mit einer Korrosionsschutzschicht versehen. Bevorzugt ist die Korrosionsschutzschicht eine Kunststoffbeschichtung, ein Lack oder eine metallische Beschichtung. Eine porenfreie Zinnschicht hat sich als Korrosionsschutzschicht besonders bewährt, da sie widerstandsfähig ist, die Magnetwirkung nicht oder kaum beeinflusst und die nötigen Gleiteigenschaften z.B. für das Eingreifen eines Verbindungsglieds in eine Öffnung bzw. Ausnehmung nicht beeinträchtigt.

In noch einer weiteren Ausführungsform des Verhindungssystems ist eine Magnetabschirmung vorgesehen, welche in zusammengefügtem Zustand der Einzelsegmente ein Austreten des Magnetfeldes aus den Einzelsegmenten verhindert. Hierzu können Kupfer, Eisen oder ferromagnetische Materialien und insbesondere sogenannte MU-Metalle (weichmagnetische Nickel-Eisen-Legierungen hoher Permeabilität (µr =50'000 bis 140'000)) verwendet werden. Auf diese Weise lassen sich Störfelder, die ansonsten beispielsweise Radioempfang Herzschrittmacher oder Mobiltelefone negativ beeinflussen könnten absolut ausgeschlossen werden.

In einer besonderen Ausführungsform ist die Magnetabschirmung einstückig mit einem Verbindungselement und/oder dem Verbindungsglied bzw. als Beschichtung eines Verbindungselements und/oder des Verbindungsglieds ausgebildet. In einer weiteren besonderen Ausführungsform ist die Magnetabschirmung als Abschirmhülse einsetzbar in Ausnehmung bzw. Öffnung und ein Verbindungselement und einen Teil des Verbindungsglieds aufnehmend ausgebildet. In noch einer besonderen Ausführungsform ist die Magnetabschirmung als Abschirmhülse einsetzbar in eine durchgehende Öffnung eines dritten Einzelsegments, das in zusammengefügtem Zustand zwischen dem ersten Einzelsegment und dem zweiten Einzelsegment angeordnet ist, und einen Teil des Verbindungsglieds aufnehmend ausgestaltet.

In einer weiteren Ausführungsform des Verbindungssystems werden als magnetisches Material für magnetische Elemente Neodym oder Neodym-Verbindungen verwendet.

In einer weiteren Ausführungsform sind für Transportzwecke Schmutzschutzelemente vorgesehen, welche Verbindungselemente, insbesondere magnetische Verbindungselemente, nach ihrer Fixierung in einem Einzelsegment vor Schmutz schützen.

Ein Einzelsegment der erfindungsgemässen gefügten Einheit ist ein blockartiges, plattenartiges oder balkenartiges Element, ein Beschlag, und weist Ausnehmungen bzw. Öffnungen bzw. eine durchgehende Öffnungen für die Aufnahme von wenigstens einem Verbindungselement und/oder Teilen eines Verbindungsglieds eines erfindungsgemässen Verbindungssystems auf. Die Ausnehmungen und Öffnungen sind dabei so ausgestaltet, dass die Verbindungselemente darin versenkt, vorzugsweise unsichtbar darin versenkt und insbesondere so unsichtbar darin versenkt befestigt werden können, dass ein Teil eines Verbindungsgliedes ebenfalls in die Ausnehmung bzw. Öffnung eingreifen kann.

Unter Beschlag werden Griffleisten und Griffe, Knöpfe, Knaufe etc. sowie Schlösser für Möbeltüren und Schubladen; Auszugselemente für Schubladen, Riegelelemente und Unterteilungen für Schubladen; Scharniere und Zierbänder ebenso verstanden wie Fenstergriffe, Türgriffe, Türfallen, Schlösser für diese, Türbänder oder Fensterbänder. Plattenartig ausgestaltete Einzelsegmente, wie Sichtblenden, Möbelwände (Seiten, Front, Rückwände) Möbeldecken, Möbeldeckel oder Möbelböden sowie Seitenwände, Fronten, Rückwände und Böden von Schubladen, oder auch Türblätter, können aus den verschiedensten Plattenmaterialien gefertigt sein, mit ein- oder mehrlagigem Aufbau, in Leichtbau- oder Schichtaufbau und sowohl in roher als auch beschichteter bzw. belegter oder anders veredelter Ausführung. Das Material der mit dem Verbindungssystem zu verbindenden Einzelsegmente der Möbel, Türen oder Fester kann aus der Gruppe folgender Materialien stammen: Metall, Kunststoff, Hart- und Weichhölzer, Glas, Keramik, Glaskeramik sowie Verbundmaterialien aus diesen Materialien bzw. Gemische dieser Materialien.

In einer besonderen Ausführungsform ist das Einzelsegment ein Einzelelement eines Möbels und weist Ausnehmungen bzw. Öffnungen bzw. durchgehende Öffnungen in einem für den Möbelbau üblichen Raster und mit für den Möbelbau üblichen Durchmessern auf.

Die mit dem erfindungsgemässen Verbindungssystem zu verbindenden Einzelsegmente können beispielsweise die folgenden sein:
- Türblätter, Türfutter, Türverblendungen oder Türrahmen aus Holz, Metall oder Kunststoff, die mit entsprechenden Beschlägen verbunden werden sollen;
- Fensterflügel Fensterfutter, Fensterverblendungen oder Fensterrahmen aus Holz, Metall oder Kunststoff, die mit zugehörigen Beschlägen verbunden werden sollen; sowie
- Fensterflügel bzw. Türblätter mit einem Einsatz z.B. aus Glas, deren einzelne Segmente miteinander verbunden werden sollen;
- Seitenwände, Deckenplatten und Böden sowie Türen oder Deckel von Möbeln aus Holz, Metall oder Kunststoff;
- Schubladenelemente und Innenauszüge eines Möbels, die zusammengefügt werden sollen sowie Riegelelemente und Unterteilungen hierfür, wobei diese jeweils aus Holz, Metall oder Kunststoff gefertigt sein können (wobei wiederum nicht alle Elemente aus dem gleichen material gefertigt sein müssen; beispielsweise kann die Schublade an sich aus Holz sein die Riegelelemente aber aus Metall und/oder die Unterteilungen aus Kunststoff);
- Einlegeböden, die mit Seitenwänden eines Möbels verbunden werden sollen;
- Teile eines Bettgestells, die miteinander verbunden werden sollen;
- Beschläge für solche Möbel, die mit entsprechenden Seitenwänden, Deckenplatten, Böden, Schubladenelementen eines Möbels verbunden werden sollen.

Denkbar sind beispielsweise Ausführungsformen des erfindungsgemässen Verbindungssystems, bei denen ein erstes Einzelsegment beispielsweise plattenförmigen ausgebildet ist und ein zweites Einzelsegment als Beschlag. Der Beschlag ist beispielsweise ein Teil eines Scharniers, und ist aus einem magnetisierbarem Material gefertigt. Zur Aufnahme eines Verbindungsglieds weist der Beschlag eine Öffnung auf. Das plattenförmige Segment ist beispielsweise eine Schranktür und weist eine Ausnehmung zur Aufnahme des Verbindungsglieds auf. In der Ausnehmung ist ein magnetisierbares, scheibenförmiges Verbindungselement in einem buchsenartigen Abschirmungselement fixiert, welches wiederum, zum Beispiel durch Einspreizen in der Ausnehmung fixiert ist. Dieses ist zur Magnetabschirmung vorgesehen und verhindert im zusammengefügten Zustand der Einzelsegmente ein Austreten des Magnetfeldes. Das Verbindungsglied ist als ein magnetisches Element ausgestaltet. Durch Einführen des Verbindungsgliedes in die Ausnehmung des plattenartigen ersten Einzelsegments und in die Öffnung des Beschlags werden magnetische Wirkverbindungen zwischen dem Verbindungsglied einerseits und dem Verbindungselement sowie dem Beschlag andererseits hergestellt, die für eine feste, lösbare Verbindung der beiden Segmente sorgen.

Denkbar sind ebenso Ausführungsformen mit einem plattenförmigen Einzelsegment zwischen zwei als Beschläge ausgeführten Einzelsegmenten. Die Beschläge bestehen entweder wiederum aus magnetisierbarem material und die Verbindung ist Analog der oben beschriebenen aufgebaut und funktioniert analog oder aber sie sind aus einem nicht-magnetisierbaren Material, wie beispielsweise aus Kunststoff oder Aluminium gefertigt. In einem solchen Fall weisen die beiden Beschläge jeweils eine Ausnehmung bzw. Öffnung auf, in welchen je ein magnetisches Element als Verbindungselement fest angeordnet ist, z.B. mittels Presspassung oder Verschraubung. Das plattenförmige Einzelsegment zwischen den Beschlägen weist eine durchgehende Öffnung auf, so dass ein Verbindungsglied durch diese durchgehende Öffnung des plattenförmigen Einzelsegments führbar ist und in die Ausnehmung bzw. Öffnung der Beschläge eingreifen kann. Das Verbindungsglied weist beispielsweise ein nichtmagnetisches Zentralstück auf und an den Stirnseiten zwei magnetische Pole. Diese Pole stehen nach dem Einführen in die Ausnehmung bzw. Öffnung mit den ebenfalls magnetischen Verbindungselementen in Wirkverbindung, wobei jeweils ein Nordpol einen Südpol kontaktiert, sodass die Beschläge fest aber lösbar an dem plattenförmigen Einzelsegment angeordnet sind.

Ein zerlegbares Möbelstück weist ein erfindungsgemässes Verbindungssystem auf, wobei das Möbelstück aus einer Mehrzahl erfindungsgemässer Einzelsegmente zusammensetzbar ist und die Einzelsegmente insbesondere Möbelwände, Möbelböden, Möbelfronten, Möbeldecken bzw. Möbeldeckel sowie Schubladen, deren Einzelsegmente, Sichtblenden, Zierleisten, unterschiedlichste Beschläge.

Das Verbindungssystem wird nachfolgend anhand von in den Figuren dargestellten Ausführungsbeispielen näher beschrieben. Die Erläuterungen erfolgen nur beispielhaft und haben keine beschränkende Wirkung. In den Figuren zeigen rein schematisch:
- Fig. 1a-b: ein Zusammensetzen eines Möbelteils aus zwei Einzelsegmenten mittels eines Verbindungssystems;
- Fig. 2a-c: in einer Schnittansicht eine erste Ausführungsform des eines Verbindungssystems gemäß Stand der Technik und seine Funktionsweise;
- Fig. 3a-h: ebenfalls in Schnittansicht Teilansichten verschiedener weiterer Ausführungsformen des Verbindungssystems;
- Fig. 4a-e: auch in Schnittansicht weitere Ausführungsformen eines Verbindungssystems in Teilansichten;
- Fig. 5a-c: in Seitenansicht verschiedene Ausführungsformen eines Verbindungsglieds des Verbindungssystems;
- Fig. 5d, 5e: in einer Schnittansicht eine erfindungsgemässe Ausführungsform eines Verbindungsglieds des Verbindungssystems;
- Fig.6: ein erfindungsgemässes Verbindungssystem im Schnitt quer zur Verbindung, wobei zwecks besserer Erkennbarkeit links im Bild das Verbindungsglied und rechts im Bild ein Einzelsegment mit Verbindungselement dargestellt ist; und
- Fig.7: im Schnitt quer zur Verbindung beispielhaft eine Auswahl möglicher Querschnittformen des erfindungsgemässen Verbindungssystems.

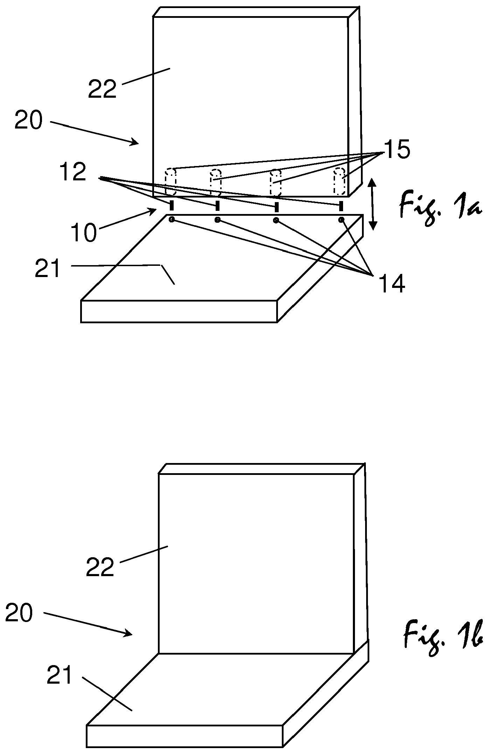

Die Figuren 1a und 1b illustrieren anhand eines aus zwei Einzelsegmenten 21, 22 zusammensetzbaren Möbelteils 20 ein beispielhaftes Anwendungsgebiet einer Ausführungsform des erfindungsgemässen Verbindungssystems 10. Im dargestellten Beispiel soll eine Seite eines ersten Einzelsegments 21 mit einer Stirnseite eines zweiten Einzelsegments 22 fest aber lösbar verbunden werden.

In Figur 1a ist dargestellt, dass das erste Einzelsegment 21 an der Verbindungsfläche vier Ausnehmungen 14 aufweist. Das zweite Einzelsegment 22 weist an den entsprechenden Positionen seiner zu verbindenden Stirnseite ebenfalls Öffnungen 15 auf, die hier durch gestrichelte Linien angedeutet sind. Die Ausnehmungen 14 bzw. Öffnungen 15 sind in einem für Möbel üblichen Raster angeordnet und haben einen kreisförmigen Querschnitt mit einem für Möbel üblichen Durchmesser. In die Ausnehmungen und Öffnungen sind Verbindungselemente (nicht dargestellt) des Verbindungssystems 10 fest eingefügt z.B. durch Schrauben, Kleben oder Spreizen. Das Verbindungssystem 10 weist weiter Verbindungsglieder 12 auf, die in die Ausnehmungen 14 des ersten Einzelsegments 21 sowie in die Öffnungen des zweiten Einzelsegments 22 einführbar sind. Die Verbindungsglieder 12 sind zumindest teilweise magnetisch oder magnetisierbar und gehen mit den (hier nicht dargestellten) ebenfalls magnetischen oder magnetisierbaren Verbindungselementen in den Ausnehmungen 14 und Öffnungen 15 der Einzelsegmente 21, 22 eine magnetische Wirkverbindung ein. Die magnetische Wirkverbindung wirkt als Zugkraft auf die Einzelsegmente 21, 22 und bewegt diese aufeinander zu. Außerdem erfolgt durch die anziehende magnetische Wirkung eine automatische Zentrierung und es wird ein schnelles Fassen und Fixieren der Verbindung zwischen den Einzelsegmenten 21, 22 gewährleistet.

In Figur 1b ist das Möbelstück 20 zusammengesetzt, d. h. mit verbundenen Einzelsegmenten 21, 22 gezeigt. Die Einzelsegmente 21, 22 werden spaltfrei über die Magnetkräfte des Verbindungssystems 10 zusammengehalten und können durch entsprechenden Kraftaufwand werkzeuglos wieder voneinander gelöst werden. Denkbar ist aber auch, dass die Einzelsegmente mit einem definierten Spalt bzw. einer Fuge zwischen den Einzelsegmenten mit definierter Breite gefügt sind, wobei entweder erste Verbindungselemente und/oder zweite Verbindungselemente und/oder die Verbindungsglieder mit fugenbildenden Mitteln ausgestattet sind. Die fugenbildenden Mittel können dabei aus semi-transparentem oder transparentem Material wie beispielsweise Acryl gebildet sein.

Das Verbindungssystem 10 eignet sich für ein Verbinden von Einzelsegmenten 21, 22 sowohl horizontal als auch vertikal oder diagonal, für Korpusecken im rechten Winkel, sowie Gehrungs-, Verblendungs-, Verkleidungs-, Kranzleisten-, Wangen- und Rahmenverbindungen.

Die Magnetstärke des Verbindungsglieds 12 oder eines Verbindungselements ist unter anderem abhängig von dessen Form und Volumen. Dementsprechend kann eine gewünschte Verbindungsstärke zwischen den Einzelsegmenten auch durch Auswahl eines entsprechend geformten Verbindungsglieds 12 oder Verbindungselements eingestellt werden. Eine günstige Magnetfeldverteilung ergibt sich beispielsweise für ein zylindrisches Element mit einem Verhältnis von Durchmesser zu Länge von 1:1.

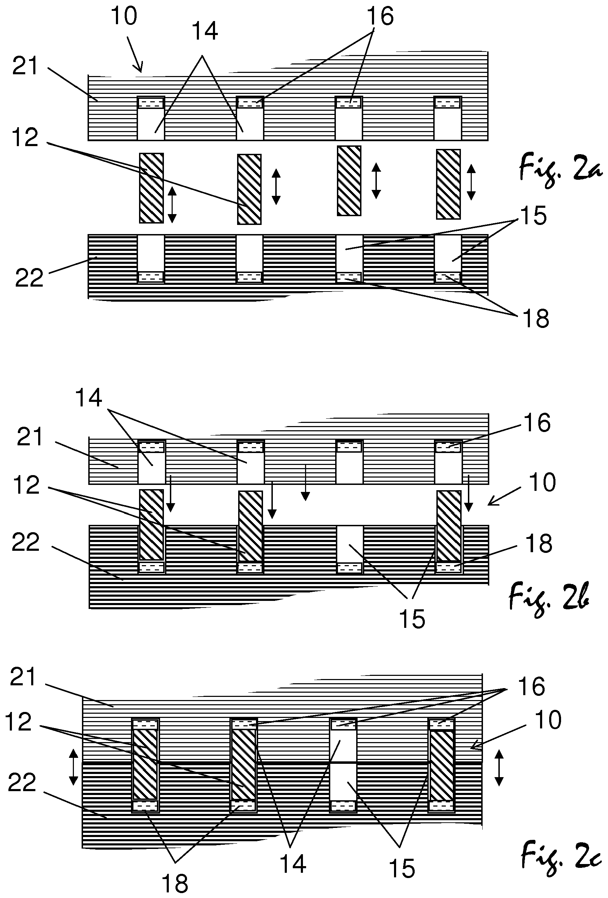

In den Figuren 2a bis 2c sind Ausführungsformen des Verbindungssystems 10 gemäß Stand der Technik undseine Funktionsweise gezeigt. Dargestellt sind jeweils ein erstes Einzelsegmente 21 und ein zweites Einzelsegment 22 zur Verbindung mittels eines Verbindungssystems 10. Das erste Einzelsegment 21 weist eine Anzahl an Ausnehmungen 14 auf, in welchen jeweils ein erstes Verbindungselement 16 fest angeordnet ist. Das zweite Einzelsegment 22 weist eine entsprechende Anzahl an Öffnungen 15 auf, in welchen jeweils ein zweites Verbindungselement 18 fest angeordnet ist. Das Verbindungssystem 10 weist darüber hinaus eine der Zahl der Ausnehmungen 14 und Öffnungen 15 entsprechende Anzahl an Verbindungsgliedern 12 auf, die jeweils formschlüssig in die Ausnehmungen 14 und Öffnungen 15 einführbar ausgestaltet sind (vgl. Fig. 2a). Das Verbindungsglied 12 ist entweder selbst als ein magnetisches Element oder als ein an seinen Stirnseiten magnetisches Element ausgebildet, und die Verbindungselemente 16, 18 beider Einzelsegmente 21, 22 sind zumindest teilweise magnetisierbare Elemente. Oder die Verbindungselemente 16, 18 sind jeweils als ein magnetisches Element ausgebildet, und das Verbindungsglied 12 ist ein zumindest teilweise magnetisierbares Element ausgestaltet. Es können aber auch Verbindungsglied und Verbindungselemente magnetisch ausgebildet sein, wobei die Polung dann so gewählt ist, dass Verbindungsglied und Verbindungselemente einander anziehen.

In Figur 2a sind die Elemente des Verbindungssystems 10 einzeln, d. h. vor dem Verbinden der Segmente, dargestellt.

In Figur 2b sind die Verbindungsglieder 12 in die Öffnungen 15 eingeführt, wo sie eine magnetische Wirkverbindung mit den darin fest angeordneten Verbindungselementen 16 eingehen. Anschliessend werden die beiden Einzelsegmente 21, 22 aufeinander zu bewegt, sodass die freien Enden der Verbindungsglieder 12 in die Ausnehmungen 14 eingeführt werden.

In Figur 2c ist der Endzustand dargestellt. Die Verbindungsglieder 12 sind jeweils vollständig in Ausnehmung 14 und Öffnung 15 der beiden Einzelsegmente 21, 22 eingeführt und stehen jeweils mit den in diesen fest angeordneten Verbindungselementen 16, 18 in einer magnetischen, einander anziehenden Wirkverbindung. Dadurch sind die Einzelsegmente 21, 22 fest aber lösbar miteinander verbunden. Sie können in Verbindungsrichtung durch Aufbringen einer die magnetische Anziehungskraft überwindenden Zugkraft werkzeug- und beschädigungslos voneinander gelöst aber nicht quer zur magnetischen Anziehungskraft und quer zu den Verbindungsgliedern gegeneinander verschoben werden.

Durch eine Verringerung der Zahl der Verbindungsglieder 12 kann die Stärke der Verbindung eingestellt werden. So sind beispielsweise - wie hier in den Figuren 2b und 2c dargestellt - mit nur drei Verbindungen zusammengefügte Einzelsegmente 21, 22 leichter, d. h. mit weniger Kraftaufwand, wieder voneinander lösbar als mit vier Verbindungsgliedern zusammengefügte Einzelsegmente 21, 22.

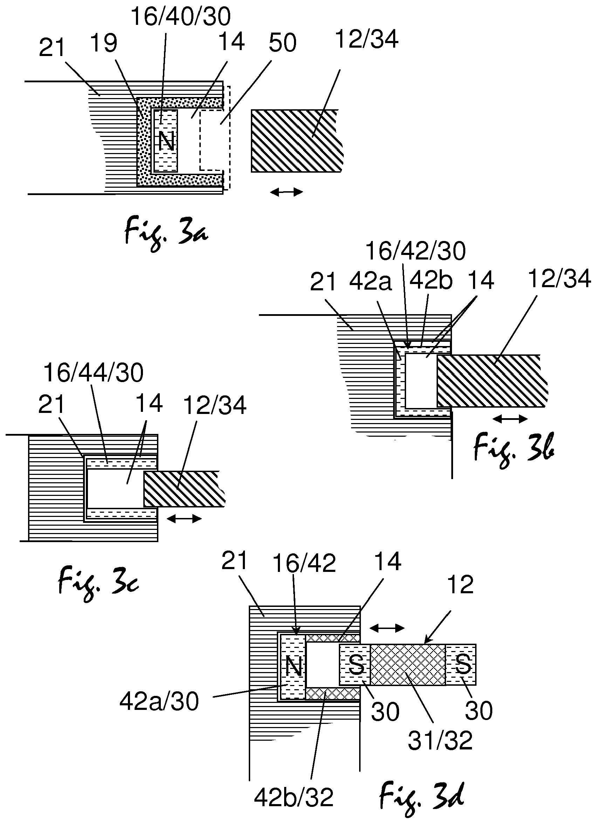

Die Figuren 3a bis 3h zeigen Teilansichten verschiedener weiterer Ausführungsformen eines solchen Verbindungssystems jeweils in einem Längsschnitt. Dargestellt sind jeweils ein erstes Einzelsegment 21 mit einer Ausnehmung 14, in welcher ein Verbindungselement 16 fest angeordnet ist, sowie ein in die Ausnehmung 14 einzuführendes Verbindungsglied 12. Dabei wird unter "fest angeordnet" verstanden, dass die Verbindung zwischen dem Verbindungselement und dem Einzelsegment stärker ist als eine auf das Verbindungselement wirkende magnetische Zugkraft. "Fest angeordnet" meint also, dass das Verbindungselement in der Ausnehmung durch Kleben, Schrauben, Spreizen oder ähnliche form bzw. kraftschlüssige oder durch adhäsive Methoden fixiert ist. Es versteht sich, dass zweite Einzelsegmente und ihre Öffnungen und Verbindungelemente in analoger Weise ausgestaltet sein können.

Bei den hier rein beispielhaft dargestellten Einzelsegmenten 21 kann es sich insbesondere um eine Seitenwand eines Schrankes, einen Regalboden, ein Segment einer Schublade oder ein anderes Segment eines Möbelstückes, einer Tür oder eines Fensters handeln.

In Figur 3a ist das magnetische Verbindungselement 16 in Form einer magnetischen Scheibe 40 ausgebildet und fest in eine stirnseitige Ausnehmung 14 eines plattenartigen, ersten Einzelsegments 21 eingesetzt. Das Verbindungselement 16 ist in dieser Ausführungsform fest in ein als geschlossene Buchse ausgebildetes Abschirmungselement 19 eingesetzt, z.B. in diese eingeschraubt, während das Abschirmungselement 19 fest in die Ausnehmung 14 eingesetzt ist, beispielsweise ebenfalls durch Einschrauben oder durch Einkleben. Das Abschirmungselement 19 ist zur Magnetabschirmung vorgesehen und verhindert ein Austreten des Magnetfeldes des Verbindungselements 16. Das Verbindungsglied 12 ist als magnetisierbares Element 34, z.B. aus ferromagnetischem Material, ausgebildet und kann formschlüssig in das Abschirmungselement 19 eingeführt werden. Es geht dann aufgrund des anziehenden magnetischen Feldes des Verbindungselements 16 mit dem als magnetische Scheibe 40 ausgestalteten Verbindungselement 16 eine magnetische Wirkverbindung ein.

An der Öffnung der Ausnehmung 14 ist optional ein Schmutzschutzelement 50 vorgesehen (durch gestrichelte Linien angedeutet). Das Schmutzschutzelement 50 dient während des Transports oder der Lagerung der Einzelsegmente 21 zum Schutz der Ausnehmung 14 und des darin versenkt fixierten und in diesem Falle magnetischen Verbindungselementes 16 vor Schmutz. Es kann zum Beispiel aus Kunststoff gefertigt sein und wird vor dem Einführen des Verbindungsglieds 12 entfernt.

In Figur 3b ist ein blockartiges erstes Einzelsegment 21 mit einer Ausnehmung 14 dargestellt. Das magnetische Verbindungselement 16 ist in diesem Beispiel als eine geschlossene Buchse 42 mit einem Buchsenboden 42a und einem Buchsenzylinder 42b ausgeführt. Die Buchse 42 ist zur formschlüssigen Aufnahme des als magnetisierbares Element 34 ausgebildeten Verbindungsglieds 12 ausgestaltet. Buchsenboden 42a und Buchsenzylinder 42b sind je als magnetisches Element 30 ausgestaltet.

In Figur 3c ist das magnetische Verbindungselement 16 als eine beidseitig offene Hülse 44 ausgestaltet. Die Hülse 44 ist magnetisch und zur formschlüssigen Aufnahme des magnetisierbaren Verbindungsglieds 12 ausgestaltet.

In Figur 3d ist die Ausnehmung 14 auf einer flachen Seite eines plattenartigen, ersten Einzelsegments 21 angeordnet. Das darin fixierte Verbindungselement 16 ist teilweise magnetisch. Es ist als eine geschlossene Buchse 42 mit einem Buchsenboden 42a und einem Buchsenzylinder 42b ausgeführt, wobei in diesem Beispiel nur der Buchsenboden 42a als magnetisches Element 30 ausgestaltet ist, während der Buchsenzylinder 42b aus nichtmagnetisierbarem Material 32 gestaltet ist. Der Buchsenzylinder 42b ist in diesem Beispiel axial bzw. in Verbindungsrichtung an dem Buchsenboden 42a angesetzt und fixiert. Das Verbindungsglied 12 ist auf seinen beiden Stirnseiten mit einem magnetischen Element 30 ausgestaltet, das gegenpolig (in diesem Beispiel: Südpol) zum magnetischen Buchsenboden 42a (in diesem Beispiel: Nordpol) des Verbindungselements 16 magnetisiert ist, so dass sich die beiden Magnete 30 anziehen. Dadurch, dass Verbindungsglied 12 und Verbindungselement 16 als Magnete 30 ausgebildet sind, kann die haltende Verbindungskraft grösser gestaltet werden als bei einer Kombination Magnet 30 - magnetisierbares Element 34. Um die Flexibilität der Einzelsegmente 21, 22 und ihrer Zusammenfügbarkeit trotz der Kombination Magnet-Magnet beizubehalten, ist das Verbindungsglied 12 hier in einem mittleren Bereich 31 (auch als Zentralstück oder Zwischenstück bezeichnet) aus einem nichtmagnetisierbaren und nichtmagnetischen Material 32 gestaltet und beide Stirnseiten des Verbindungsgliedes 12 sind gleichpolig aus magnetischem Material 30 gefertigt. Alle Verbindungselemente 16 können demnach ebenfalls gleichpolig ausgebildet sein - und gegenpolig zur Polung des Verbindungsglieds 12.

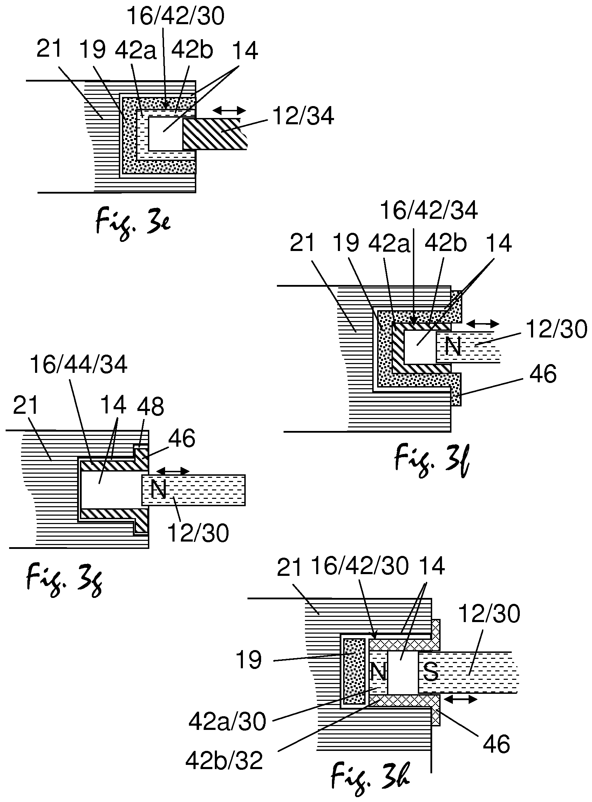

Das Beispiel aus Figur 3e ist analog zu demjenigen aus Figur 3b ausgestaltet, nur dass das Verbindungselement 16 zusätzlich ein Abschirmungselement 19 aufweist, welches zur Magnetabschirmung vorgesehen ist und ein Austreten des Magnetfeldes des Verbindungselements 16 verhindert. In diesem Beispiel ist das Abschirmungselement 19 als geschlossene Buchse gebildet und aus einem MU-Metall gestaltet, welche das ebenfalls als Buchse 42 ausgebildete Verbindungselement 16 aufnimmt.

Sowohl das Abschirmungselement 19 als auch das Schmutzschutzelement 50 können natürlich bei jeder der in dieser Anmeldung gezeigten Ausführungsformen vorgesehen sein.

Ein als eine Buchse 42 oder Hülse 44 ausgestaltetes Verbindungselement 16 oder auch ein analog ausgebildetes Abschirmungselement 19 kann optional öffnungsseitig mit planer Stirnfläche, mit seitlichem Überstand oder mit einem radial über einen Rand einer Öffnung oder einen Rand einer Ausnehmung hinausragenden Flansch 46 ausgestaltet sein. Der seitliche Überstand bzw. Flansch 46 liegt dann entsprechend auf der Werkstoffebene des Einzelsegments auf (vgl. Beispiele der Figuren 3f und 3h) und wirkt beim Aneinanderfügen der Einzelelemente fugen- bzw. spaltbildend. Ebenso können aber auch vertieft zum Flächenniveau des Einzelsegments die Ausnehmungen 14 bzw. Öffnungen 15 mit Randnuten 48 versehen sein, welche die Flansche 46 oder einen Überstand aufnehmen können (vgl. Figur 3g). Besonders vorteilhaft ist der Flansch 46 bzw. Überstand einstückig mit dem Verbindungselement 16 oder dem Abschirmungselement 19 ausgebildet. Im Falle, dass der Flansch 46 bzw. Überstand fugen- bzw. spaltbildend verwendet werden soll, ist es vorteilhaft, wenn dieser aus einem semi-transparenten oder transparenten Material, wie z.B. Acryl gefertigt ist.

In den Figuren 3f bis 3h sind weitere Kombinationen von Verbindungselementen und Verbindungsgliedern gezeigt.

So ist in Figur 3f das Verbindungselement 16 wieder als Buchse 42 ausgebildet, die in einer Abschirmbuchse 19 gefasst ist. Allerdings sind hier Buchsenboden 42a und Buchsenzylinder 42b aus dem gleichen magnetisierbaren Material 34, z.B. Eisen oder ein mit magnetisierbaren Partikeln versetzter Kunststoff. Die Abschirmungsbuchse weist hier den oben erwähnten fugenbildenden radialen Flansch 46 auf. Das Verbindungsglied 12 ist als magnetisches Element 30 ausgebildet.

In Figur 3g ist das Verbindungselement 16 als Hülse 44 aus magnetisierbarem Material 34 mit einstückig ausgebildetem radialem Flansch 46 ausgebildet. Der Flansch 46 ist hier allerdings in eingebautem Zustand in einer Randnut 48 der Ausnehmung 14 versenkt. Das Verbindungsglied 12 ist wiederum als magnetisches Element 30 ausgebildet.

Das Beispiel aus Fig. 3h entspricht im Wesentlichen dem aus Fig. 3d, nur dass hier das Einzelsegment 21 ein blockartiges Segment ist und der Buchsenzylinder 42b des Verbindungselements 16 aus Acryl gebildet ist und einen einstückig angeformten, radial überstehenden, fugenbildenden Flansch 46 aufweist. Zur magnetischen Abschirmung ist in der Ausnehmung 14 des ersten Einzelsegments 21 in diesem Beispiel ein Abschirmungselement 19 in Scheibenform stirnseitig am Boden der Ausnehmung 14 fixiert.

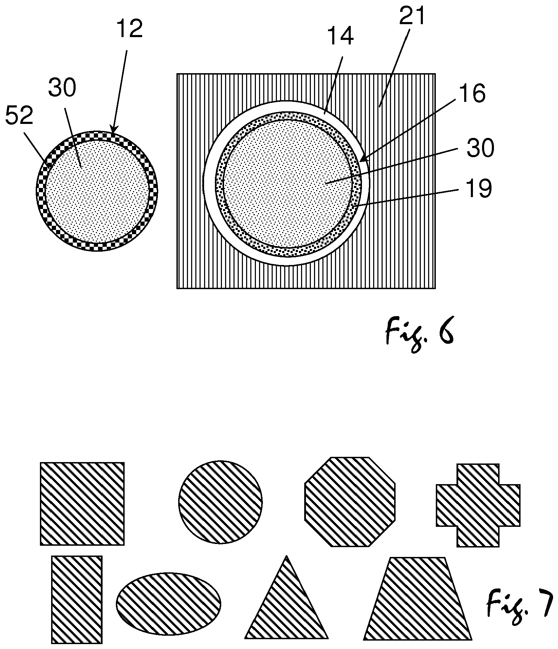

Der Innen-Querschnitt und/oder Aussen-Querschnitt eines als Scheibe 40, Buchse 42 oder Hülse 44 ausgestalteten Verbindungselements und entsprechend passend dazu natürlich der Querschnitt der zugehörigen Ausnehmung 14 bzw. Öffnungen 15 und der Querschnitt des zugehörigen Verbindungsglieds 16 kann beispielsweise kreisförmig, oval, quadratisch oder polygonal ausgestaltet sein, wie dies beispielhaft in Figur 7 dargestellt ist. Die Ecken können dabei sowohl kantig als auch abgeschrägt oder abgerundet sein.

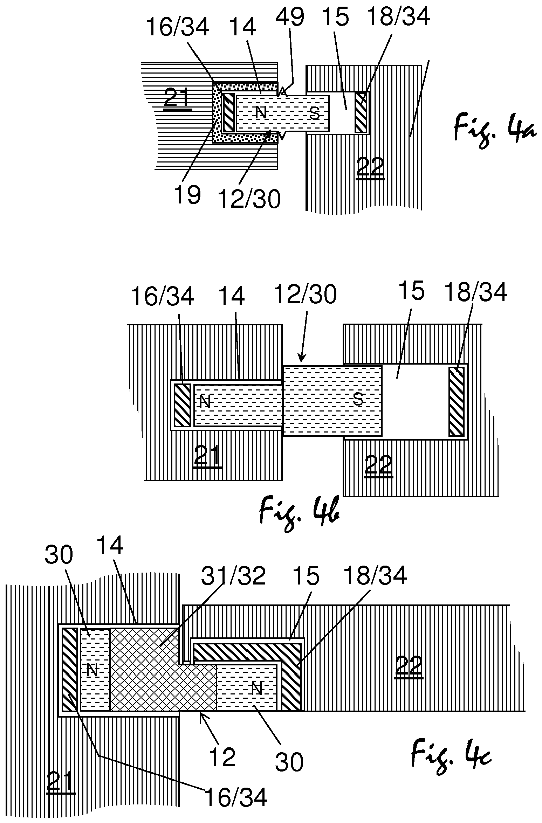

Figur 4a zeigt eine weitere Ausführungsform eines solchen Verbindungssystems 10. Dargestellt sind zwei Einzelsegmente 21, 22, wobei das erste Einzelsegment 21 eine Ausnehmung 14 mit einem als Buchse ausgeführten Abschirmungselement 19 aufweist. Das Abschirmungselement 19 ist in die Ausnehmung 14 eingespreitzt und das scheibenförmige erste Verbindungselement 16 ist in das Abschirmungselement 19 eingeklebt. Das zweite Einzelsegment 22 weist eine Öffnung 15 auf, in welcher ein zweites scheibenförmiges Verbindungselement 18 eingeklebt ist. Ein Verbindungsglied 12 ist formschlüssig sowohl in die Ausnehmung 14 als auch in die Öffnung 15 einführbar und weist etwa in seiner Mitte eine fugenbildende Wulst 49 auf. Die Verbindungselemente 16, 18 sind in diesem Beispiel als magnetisierbare Elemente 34 ausgebildet, das Verbindungsglied 12 ist in dieser Ausführungsform als ein magnetisches Element 30 mit Nordpol und Südpol ausgestaltet. Wird das Verbindungsglied in die Öffnung oder die Ausnehmung eingeführt und werden die beiden Einzelsegmente dann aufeinander zu bewegt, so dass die Ausnehmung bzw. Öffnung etwa auf das Verbindungsglied 12 trifft so zentrieren sich die Segmente automatisch und werden durch das Magnetfeld gegenseitig angezogen und fixiert. Durch die Wulst des Verbindungsglieds bleibt aber ein definierter Spalt bzw. eine Fuge mit definierter Breite zwischen den Einzelsegmenten bestehen, wobei die Breite der Fuge bzw. des Spalts, der Breite der bzw. axialen Ausdehnung der Wulst 49 entspricht.

In Fig. 4b sind in der Ausnehmung 14 bzw. Öffnung 15 der Einzelsegmente 21, 22 scheibenförmige, magnetisierbare 34 Verbindungselemente 16, 18 fixiert und das Verbindungsglied 12 ist als magnetisches Element 30 mit Nordpol und Südpol ausgebildet. Speziell an diesem Beispiel ist, dass Ausnehmung 14 und Öffnung 15 nicht gegengleich ausgebildet sind, sondern sich entweder im Durchmesser oder in ihrer Querschnittsform insgesamt voneinander unterscheiden. Indem das Verbindungsglied 12 in seinen in die Öffnung 15 bzw. die Ausnehmung 14 einzuführenden Anteilen mit einem entsprechend angepassten Querschnitt ausgebildet ist, lassen sich auch Einzelsegmente mit solch unterschiedlichen Öffnungen/Ausnehmungen miteinander verbinden.

Fig. 4c zeigt, in diesem Beispiel links dargestellt, ein erstes Einzelsegment 21 analog zum Einzelsegment aus Fig. 4b mit einem als magnetisierbare Scheibe ausgebildeten Verbindungselement 16 und mit einem Verbindungselement 12, dessen hier links dargestellte Stirnseite als ein magnetisches Element 34 (Nordpol) ausgebildet ist und über ein Zentralstück 31, welches aus nicht magnetischem und nicht magnetisierbarem Material 32 gebildet ist, mit einer gegenüberliegenden Stirnseite verbunden ist, welche ebenfalls aus eine als Nordpol ausgebildeten magnetischen Element 34 gebildet ist. Die in der Figur 4c links dargestellte Seite des Verbindungsglieds 12 ist passend für das Eingreifen in die Ausnehmung 14 mit dem ersten Verbindungselement 16 ausgestaltet; die rechts dargestellte Seite des Verbindungsgliedes 12 weist dagegen eine Auflagefläche auf, auf der ein zweites Einzelsegment 22 aufliegt. Das zweite Einzelsegment 22, ist beispielweise ein Ablagebrett für einen Schrank oder ein Regal. Es weist in dem Bereich, in dem es auf dem Verbindungsglied 12 aufliegt eine Öffnung 15 auf, in der ein als Halbhülse ausgebildetes magnetisierbares, zweites Verbindungselement 18 fixiert ist, wobei der hier rechts dargestellte Teil des Verbindungsglieds 12 in die Halbhülse des Verbindungselements 16 eingreift. Die Verbindungselemente könnten für grössere magnetische Kräfte auch jeweils gegenpolig, das heisst in diesem Fall als Südpole ausgebildete magnetische Elemente gestaltet sein.

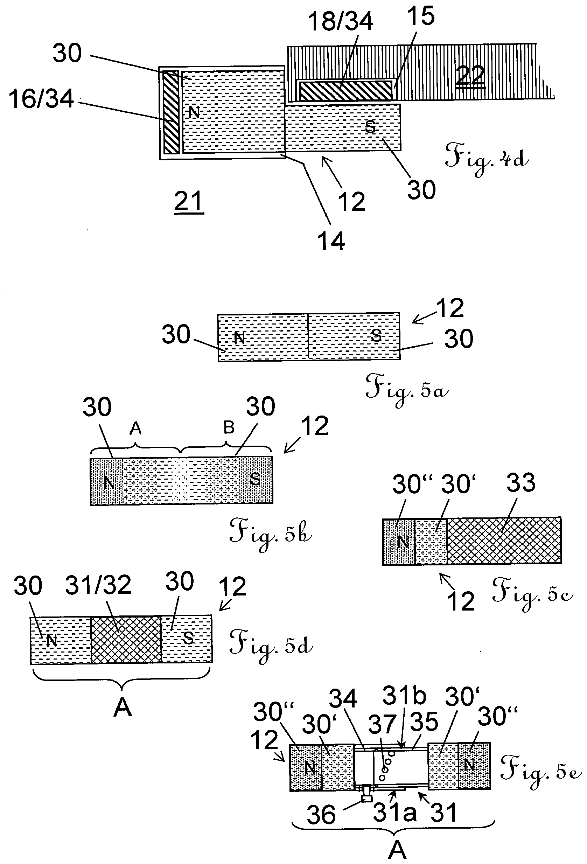

Das Beispiel aus Fig. 4d entspricht im Wesentlichen dem Beispiel aus Figur 4c, wobei das hier abermals rechts dargestellte, zweite Verbindungselement 18 als scheibenförmige Element 40 ausgebildet ist, welches in einer Öffnung 15 des zweiten (z.B. als Regalbrett ausgebildeten) Einzelelements 22 versenkt fixiert ist, so dass es auf dem hier rechts dargestellten Teil des Verbindungsglieds 12 plan aufliegt.

Die magnetischen Teile des Verbindungssystems sind vorzugsweise aus einem herkömmlichen Magnetwerkstoff, wie beispielsweise aus einer ferromagnetischen Eisenlegierung, einem ferromagnetische Partikel enthaltenden Kunststoff oder einer anderen Dauermagnetlegierung gefertigt.

In den Figuren 5a bis 5e werden in Seitenansicht verschiedene beispielhafte Ausführungsformen eines Verbindungsglieds 12 des Verbindungssystems dargestellt.

Figur 5a zeigt eine Ausführungsform, in welcher das Verbindungsglied 12 in Gänze ein magnetisches Element mit zwei magnetischen Polen 30 (Nordpol/Südpol) darstellt.

In Figur 5b ist eine Ausführungsform dargestellt, in der das Verbindungsglied 12 zwei magnetische Pole 30 aufweist, wobei die Magnetstärke vom jeweiligen Pol 30 zum Punkt (bzw. zur Fläche) der Polumkehr hin kontinuierlich abfällt. Die dargestellten Bereiche A und B kennzeichnen jeweils ein Gebiet mit Magnetstärkegradient. Als Werkstoff eines solchen magnetischen Verbindungsglieds 12 kann insbesondere ein ferromagnetische Partikel enthaltender Kunststoff dienen, bei welchem die magnetische Partikelkonzentration zu den Polen hin zu- und zur Mitte hin abnimmt.

Figur 5c zeigt ein Verbindungsglied 12, dass auf der hier rechts dargestellten Seite stirnseitig einen Abschnitt mit starkem Magnetfeld 30", daran zur Mitte hin anschliessend einen Abschnitt mit schwächerem Magnetfeld 30' und daran anschliessend einen Abschnitt 33 aufweist, der zur festen Fixierung in einer Öffnung oder Ausnehmung vorgesehen ist und daher vorzugsweise aus nicht magnetisierbarem Material gestaltet ist. Ein Solcher Abschnitt 33 könnte aber auch aus einem magnetisierbarem Material gestaltet sein und dann zum Zusammenwirken mit einem magnetischen Verbindungselement dienen, während die gegenüberliegende magnetische Seite des Verbindungsglieds mit entweder auch einem gegenpoligen, magnetischen Verbindungsglied oder einem magnetisierbaren Verbindungselement zusammenwirken kann.

Figur 5d zeigt eine Ausführungsform des erfindungsgemässen Verbindungssystem, in welcher das Verbindungsglied 12 ein Zentralstück 31 (auch Zwischenstück genannt) sowie zwei magnetische Elemente 30 an den Stirnseiten aufweist. Das Zentralstück 31 kann sowohl aus einem magnetisierbaren Werkstoff, beispielsweise ferromagnetischen Material, oder auch - wie hier dargestellt - aus einem nicht-magnetisierbaren Werkstoff 32, wie beispielsweise Kunststoff, bestehen. Das Material des Zentralstücks 31 ist dehnbar, vorzugsweise ein elastisch dehnbarer Kunststoff, wodurch die Länge des Abstandes A zwischen den stirnseitigen Elementen variabel einstellbar ist. Somit wird eine automatische Anpassung des Abstandes A zwischen den Stirnseiten des Verbindungsglieds 12 an den Abstand zwischen zwei Verbindungselementen 16, 18 möglich. Diese Anpassung wird dadurch ermöglicht, dass das Material des Zentralstücks 31 unter dem Einfluss der auf die beiden Stirnseiten des Verbindungsglieds 12 wirkenden magnetischen Kräfte expandiert. So können vorteilhaft eventuelle Abweichungen hinsichtlich der Tiefe der Ausnehmungen 14 bzw. Öffnungen 15 kompensiert werden und ein spaltfreies Verbinden der Einzelsegmente 21, 22 unter optimaler Ausnutzung der Magnetkräfte sichergestellt werden.

Figur 5e zeigt eine weitere erfindungsmässige Ausführungsform des Verbindungsglieds 12. Hier weist das Verbindungsglied 12 zwei magnetische Pole mit jeweils einem schwächer magnetisiertem Bereich 30' und einem stärker magnetisiertem Bereich 30"
an den Stirnseiten des Verbindungsglieds 12 auf. Es ist wiederum ein Zentralstück 31 vorgesehen, das derart aufgebaut ist, dass es eine Einstellung eines Abstandes A zwischen den magnetischen Stirnseiten des Verbindungsglieds 12 ermöglicht.

Das hier dargestellte Zentralstück 31 weist zu diesem Zweck zwei Teile auf, deren Längsposition zueinander mittels eines Schraubgewindes verstellbar ist. Der erste Teil weist ein Innengewinde 31a und der zweite Teil einen Aussengewinde 31b auf, wobei die beiden Gewinde 31a, 31b ineinandergreifen. Zum Fixieren eines gewünschten Abstandes A ist in diesem Beispiel eine Gewindefixierung 36, beispielsweise in Form eines Stiftes oder einer Wurmschraube, vorgesehen. Der zweite Teil des Zentralstücks 31 weist in diesem Beispiel eine Reihe von Rastlöchern 37 auf, der erste Teil eine Aufnahmeöffnung zur Aufnahme eines Stiftes 36 mit Senkkopf, der dann in die Rastlöcher des zweiten Teils des Zentralstücks 31 eingreift. Vorzugsweise ist durch eine solche Ausführungsform des Verbindungsglieds 12 der Abstand A bzw. die Länge des Abstandes A zwischen den Stirnseiten im Bereich bis zu 15% des Abstandes A verstellbar, insbesondere im Bereich bis zu 50% des Abstandes A. Mit anderen Worten: Das Zwischenstück 31 ist derart ausgebildet, dass es eine Einstellung des variablen Abstandes A zwischen den Stirnseiten zwischen einer minimalen Länge und einer maximalen Länge ermöglicht, wobei die maximale Länge, bis zu 15%, besser bis zu 50% länger ist als die minimale Länge.

Statt des Stiftes kann auch eine Wurmschraube vorgesehen sein. Die Einstellung des Abstandes A bzw. seiner Länge kann dabei, wenn Rastlöcher für die Wurmschraube bzw. den Stift vorgesehen sind, in Stufen erfolgen oder wenn die Sicherung mittels der Wurmschraube allein auf Reibung basiert, auch stufenlos.

Statt eines dehnbaren Kunststoffes oder einer Schraubverbindung als Zentralstück 31 kann auch ein Federelement, insbesondere eine Schraubenfeder vorgesehen sein. Zum Schutz des Federelements kann eine diese einhüllende Kunststoffbeschichtung oder dehnbare Kunststofffolie bzw. dehnbare Kunststoffhülse vorgesehen sein.

Ein Verbindungsglied 12 kann neben den magnetischen oder magnetisierbaren Stirnseiten vor allem als Zwischenstück 31 verwindungssteife, in axialer Richtung dehnbare Materialien aufweisen, wie beispielsweise bestimmte elastomere Werkstoffe. Aber auch Stähle und Edelstähle unterschiedlicher Zugfestigkeit (z. B. St00 oder St37) können hier vorgesehen sein. Als Materialien für nichtmagnetische oder nicht-magnetisierbare Bereiche des Verbindungsgliedes 12 kommen beispielsweise Aluminium, Messing, Kupfer oder verschiedene Kunststoffe in Frage.

Figur 6 stellt ein erfindungsgemässes Verbindungssystem im Schnitt quer zur Verbindung dar, wobei zwecks besserer Erkennbarkeit links im Bild ein Verbindungsglied 12 und rechts im Bild ein erstes Einzelsegment 21 mit einer Ausnehmung 14 und einem darin fest angeordneten ersten Verbindungselement 16 dargestellt ist.

Das links dargestellte Verbindungsglied 12 weist ein magnetisches Element 30 mit einem kreisrunden Querschnitt auf. Das magnetische Element 30 ist von einer Korrosionsschutzbeschichtung 52 umgeben. Generell können alle magnetischen Elemente eines erfindungsgemässen Verbindungssystems mit einer entsprechenden Korrosionsschutzbeschichtung 52 versehen sein, beispielsweise auf einer Kunststoff- oder Lackbasis beruhend oder in Form eines metallischen Überzugs. Dabei ist auf eine der Anwendung entsprechende Gleitfähigkeit und Verschleissfestigkeit der Beschichtung ebenso zu achten wie darauf, dass sie die Ausbreitung des magnetischen Feldes nicht oder nur in geringem Masse beeinträchtigt wird. Möglich sind insbesondere ein Eloxieren, Vernickeln oder Chromatisieren. Als besonders vorteilhaft hat sich eine porendichte Zinnschicht herausgestellt.

Das in Figur 6 rechts dargestellte Einzelsegment 21 weist eine Ausnehmung 14 auf, welche ebenso wie das darin fest angeordnete Verbindungselement 16 einen kreisrunden Querschnitt hat. Das Verbindungselement 16 weist ein magnetisches Element 30 auf, das von einer Abschirmung 19 umhüllt ist. Diese Abschirmung 19 kann insbesondere hülsenförmig oder buchsenförmig ausgebildet sein (siehe z. B. Figuren 3a oder 3e) und so neben dem Verbindungselement 16 auch ein eingeführtes Verbindungsglied 12 umfangen, so dass gegebenenfalls die Magnetfelder von Verbindungsglied 12 und Verbindungselement 16 abgeschirmt werden können. Es versteht sich, dass auch das Verbindungselement 16 mit einer Korrosionsschutzschicht versehen sein könnte. Ebenso ist für den Fachmann klar, dass der Innendurchmesser der Ausnehmung 14 so bemessen ist, dass das Verbindungsglied 12 gut darin aufgenommen werden kann. Sollte das Verbindungselement 16 als Hülse oder Buchse ausgebildet sein oder zusätzlich ein hülsen oder buchsenförmiges Abschirmungselement 19 vorgesehen werden, so sind die Querschnitte von Ausnehmung 14/Öffnung 15, Hülsen bzw.

Buchsen und Verbindungsglied 12 entsprechend aufeinander abzustimmen.

Figur 7 zeigt im Schnitt quer zur Verbindung eine beispielhafte Auswahl möglicher Querschnitte des Verbindungssystems, d. h. insbesondere des Verbindungsgliedes und eines als Buchse oder Hülse ausgeformten Verbindungselementes und einer ein solches Verbindungselement und ein solches Verbindungsglied aufnehmenden Ausnehmung bzw. Öffnung / durchgehenden Öffnung. Das Verbindungssystem kann demnach ebenso einen runden oder elliptischen Querschnitt aufweisen, wie auch einen drei-, vier- oder vieleckigen Querschnitt. Während beispielsweise ein kreisrunder Querschnitt ein besonders einfaches Einführen des Verbindungsgliedes 12 ermöglicht, ermöglichen polygone Querschnitte eine noch bessere Zentrierung. Außerdem verhindern eckige Querschnitte vorteilhaft ein Wegrollen der Verbindungsglieder, beispielsweise bei der Montage oder Demontage. Darüber hinaus sind sie aufgrund ihrer besseren Stapelbarkeit platzsparender zu lagern und zu transportieren.

Dem Fachmann ist klar, dass und in welcher Weise sich die beschriebenen Ausführungsformen bzw. die anhand der Ausführungsbeispiele beschriebenen Details innerhalb des durch die Patentansprüche gesteckten Rahmens sinnvoll kombinieren lassen. Aus Platzgründen ist es aber nicht möglich, alle möglichen und sinnvollen Kombinationen im Detail figürlich darzustellen und/oder zu beschreiben.

## Patentansprüche

1. Verbindungssystem (10) zum festen aber lösbaren Verbinden von Einzelsegmenten (21, 22, 23) zu gefügten Einheiten mit
• einem versenkt und fest in einer Ausnehmung (14) eines ersten Einzelsegments (21) anordenbaren ersten Verbindungselement (16) und mit
• einem versenkt und fest in einer Öffnung (15) eines zweiten Einzelsegments (22) anordenbaren zweiten Verbindungselement (18), und mit
• einem ebenfalls für ein Eingreifen in die genannte Ausnehmung (14) und ein Eingreifen in die genannte Öffnung (15) ausgelegten Verbindungsglied (12), welches zum magnetischen Zusammenwirken mit dem ersten Verbindungselement (16) und mit dem zweiten Verbindungselement (18) ausgebildet ist, so dass das Verbindungsglied (12) mit dem ersten und dem zweiten Verbindungselement (16, 18) eine magnetische Wirkverbindung eingeht, welche in einer gegenseitigen Anziehung zwischen dem jeweiligen Verbindungselement (16, 18) und dem Verbindungsglied (12) resultiert;, wobei
• die Verbindungselemente (16, 18) oder das Verbindungsglied (12) bzw. zumindest ein Teil des Verbindungsglieds (12) als magnetisches Element (30, 30', 30") ausgebildet ist und das andere mit diesem zusammenwirkende Verbindungselement (16, 18) bzw. Verbindungsglied (12) oder Teil des Verbindungsglieds (12) entweder ebenfalls eine magnetisches Element (30, 30', 30") oder ein magnetisierbares Element (34) ist,
**dadurch gekennzeichnet, dass**
• das Verbindungsglied (12) zwischen seinen magnetischen oder magnetisierbaren Stirnseiten ein Zwischenstück (31) aufweist,
• wobei die magnetischen oder magnetisierbaren Stirnseiten durch einen Abstand (A) mit variablen Länge voneinander beabstandet sind, und
• das Zwischenstück (31) derart ausgebildet ist, das es eine Einstellung des variablen Abstandes A zwischen einer minimalen Länge und einer maximalen Länge ermöglicht, wobei die maximale Länge, bis zu 15%, besser bis zu 50% länger ist als die minimale Länge.

2. Verbindungssystem (10) nach Anspruch 1,
**dadurch gekennzeichnet, dass**
die Länge des Verbindungsglieds (12) in Verbindungsrichtung so bemessen ist, dass nach dem Verbinden die Einzelsegmente (21, 22, 23) mittels der Magnetkräfte spaltfrei zusammenhaltbar sind, so dass das Verbindungssystem (10) nach erfolgtem Verbinden der Einzelsegmente (21, 22, 23) verdeckt liegt und von aussen nicht sichtbar ist.

3. Verbindungssystem (10) nach Anspruch 1,
**dadurch gekennzeichnet, dass**
fugenbildende Mittel vorgesehen sind, mit denen im gefügten Zustand die Einzelelemente (21, 22, 23) mit einer Fuge definierter Breiter zwischen den Einzelelementen(21, 22, 23)zusammenhaltbar sind.

4. Verbindungssystem (10) nach einem der vorhergehenden Ansprüche,
**dadurch gekennzeichnet, dass**
• das Verbindungsglied (12) jeweils stirnseitig ein magnetisches Element (30, 30', 30") aufweist, wobei die stirnseitigen magnetischen Elemente (30, 30', 30") gleichpolig sind und durch das nichtmaqnetische Zentralstück (31) voneinander beabstandet sind und
• das erste Verbindungselement (16) gleichpolig magnetisch zum zweiten Verbindungselement (18) ist und
• die beiden Verbindungselemente (16, 18) gegenpolig magnetisch zum Verbindungsglied (12) ausgebildet sind.

5. Verbindungssystem (10) nach Anspruch 4,
**dadurch gekennzeichnet, dass**
das Verbindungsglied (12) an den Stirnseiten jeweils die grösste Magnetfeldstärke und in einem mittleren Bereich die geringste Magnetfeldstärke aufweist, wobei die geringste Magnetfeldstärke vorzugsweise in der Mitte zwischen den Stirnseiten vorliegt und/oder im Bereich der geringsten Magnetfeldstärke der Polumkehrpunkt liegt; wobei die Magnetfeldstärke von den Stirnseiten zum mittleren Bereich hin entweder abschnittsweise (30", 30') geringer wird oder einen kontinuierlichen Magnetfeldstärke-Gradienten (A, B) aufweist.

6. Verbindungssystem (10) nach einem der vorhergehenden Ansprüche,
**dadurch gekennzeichnet, dass**
das Verbindungsglied (12) und/oder das erste Verbindungselement (16) und/oder das zweite Verbindungselement (18) mit einer Korrosionsschutzschicht (52) versehen ist.

7. Verbindungssystem (10) nach Anspruch 6,
**dadurch gekennzeichnet, dass**
das die Korrosionsschutzschicht (52) eine Kunststoffbeschichtung, ein Lack oder eine metallische Beschichtung ist, insbesondere eine porenfreie Zinnschicht.

8. Verbindungssystem (10) nach einem der vorhergehenden Ansprüche,
**dadurch gekennzeichnet, dass**
eine Magnetabschirmung (19) vorgesehen ist, welche in zusammengefügtem Zustand der Einzelsegmente (21, 22, 23) ein Austreten des Magnetfeldes aus den Einzelsegmenten (21, 22, 23) verhindert.

9. Verbindungssystem (10) nach Anspruch 8,
**dadurch gekennzeichnet, dass**
die Magnetabschirmung (19) ausgebildet ist
• einstückig mit einem Verbindungselement (16, 18) und/oder dem Verbindungsglied (12) bzw. als Beschichtung eines Verbindungselements (16, 18) und/oder des Verbindungsglieds (12) oder
• als Abschirmhülse einsetzbar in Ausnehmung (14) bzw. Öffnung (15) und ein Verbindungselement (16, 18) und einen Teil des Verbindungsglieds (12) aufnehmend oder
• als Abschirmhülse einsetzbar in eine durchgehende Öffnung (24) eines dritten Einzelsegments (23), das in zusammengefügtem Zustand zwischen dem ersten Einzelsegment (21) und dem zweiten
Einzelsegment (22) angeordnet ist, und einen Teil des Verbindungsglieds (12) aufnehmend.

10. Verbindungssystem (10) nach einem der vorhergehenden Ansprüche,
**dadurch gekennzeichnet, dass**
als magnetisches Material für magnetische Elemente (30, 30', 30") Neodym oder Neodym-Verbindungen verwendet wird.

11. Verbindungssystem (10) nach einem der vorhergehenden Ansprüche,
**dadurch gekennzeichnet, dass**
für Transportzwecke deckelartige, Ausnehmungen (14) bzw. Öffnungen (15) in den Einzelsegmenten (21, 22) verschliessende Schmutzschutzelemente (50) vorgesehen sind, welche Verbindungselemente (16, 18), insbesondere nach ihrer Fixierung in einem Einzelsegment (21, 22) vor Schmutz schützen.

12. Eine Zerlegbare, gefügte Einheit, insbesondere aus der Gruppe umfassend: Möbel, Türen, Fenster,
**dadurch gekennzeichnet, dass**
sie aus Einzelsegmenten (21, 22, 23) gefügt ist, insbesondere aus blockartigen, plattenartigen und/oder balkenartigen Elementen und/oder Beschlägen, wobei die Einzelsegmente (21, 22, 23) jeweils wenigstens eine Ausnehmung (14) bzw. Öffnung (15) bzw. durchgehende Öffnungen (24) für die Aufnahme von wenigstens einem Verbindungselement (16, 18) und Teilen eines Verbindungsglieds (12) eines Verbindungssystems (10) gemäss einem der vorherigen Ansprüche aufweisen und es mittels eines Verbindungssystems (10) nach einem der Ansprüche 1 bis 11 gefügt ist.

13. Die zerlegbare, gefügte Einheit, aus Anspruch 12
**dadurch gekennzeichnet, dass**
die Einheit ein aus Einzelsegmenten (21, 22, 23) gefügtes Möbel ist, und die Einzelsegmente (21, 22, 23) Ausnehmungen (14) bzw. Öffnungen (15) bzw. durchgehende Öffnungen (24) in einem für den Möbelbau üblichen Raster und mit für den Möbelbau üblichen Durchmessern aufweisen.

## Claims

1. Connecting system (10) for the fixed but releasable connection of individual segments (21, 22, 23) to form assembled units, with
• a first connecting element (16) which is arrangeable in a recessed and fixed manner in a recess (14) of a first individual segment (21), and with
• a second connecting element (18) which is arrangeable in a recessed and fixed manner in an opening (15) in a second individual segment (22), and with
• a connecting member (12) which is likewise configured for engaging in said recess (14) and engaging in said opening (15) and is designed for magnetic interaction with the first connecting element (16) and with the second connecting element (18) such that the connecting member (12) undergoes a magnetic operative connection with the first and the second connecting element (16, 18), said magnetic operative connection resulting in a mutual attraction between the respective connecting element (16, 18) and the connecting member (12); wherein
• the connecting elements (16, 18) or the connecting member (12) or at least a part of the connecting member (12) are/is designed as a magnetic element (30, 30', 30") and the other connecting element (16, 18) or connecting member (12) or part of the connecting member (12) interacting with said magnetic element is either likewise a magnetic element (30, 30', 30") or a magnetizable element (34),
**characterized in that**
• the connecting member (12) has an intermediate piece (31) between its magnetic or magnetizable end sides,
• wherein the magnetic or magnetizable end sides are spaced apart from each other by a distance (A) having a variable length, and
• the intermediate piece (31) is designed in such a manner that it permits an adjustment of the variable distance A between a minimum length and a maximum length, wherein the maximum length is up to 15%, better up to 50%, longer than the minimum length.

2. Connecting system (10) according to Claim 1, **characterized in that** the length of the connecting member (12) in the connecting direction is dimensioned in such a manner that, after connection, the individual segments (21, 22, 23) are holdable together without a gap by means of the magnetic forces, so that, after the individual segments (21, 22, 23) have been connected, the connecting system (10) lies concealed and is not visible from the outside.

3. Connecting system (10) according to Claim 1, **characterized in that** gap-forming means are provided with which the individual elements (21, 22, 23) are holdable together with a gap of defined width between the individual elements (21, 22, 23) in the assembled state.

4. Connecting system (10) according to any one of the preceding claims, **characterized in that**
• the connecting member (12) has a magnetic element (30, 30', 30") on each of the end sides, wherein the end-side magnetic elements (30, 30', 30") have like poles and are spaced apart from each other by the non-magnetic intermediate piece (31), and
• the first connecting element (16) is magnetic with like poles with respect to the second connecting element (18), and
• the two connecting elements (16, 18) are designed to be magnetic with opposite poles with respect to the connecting member (12).

5. Connecting system (10) according to Claim 4, **characterized in that** the connecting member (12) has the greatest magnetic field strength in each case on the end sides and the lowest magnetic field strength in a central region, wherein the lowest magnetic field strength is preferably present in the centre between the end sides and/or the pole reversal point lies in the region of the lowest magnetic field strength; wherein the magnetic field strength becomes lower from the end sides towards the central region either section by section (30", 30') or has a continuous magnetic field strength gradient (A, B).

6. Connecting system (10) according to any one of the preceding claims, **characterized in that** the connecting member (12) and/or the first connecting element (16) and/or the second connecting element (18) are/is provided with an anti-corrosion layer (52).

7. Connecting system (10) according to Claim 6, **characterized in that** the anti-corrosion layer (52) is a plastics coating, a varnish or a metallic coating, in particular a pore-free tin layer.

8. Connecting system (10) according to any one of the preceding claims, **characterized in that** a magnetic shield (19) is provided which - in the assambled state of the individual segments (21, 22, 23) - prevents the magnetic field from escaping from the individual segments (21, 22, 23).

9. Connecting system (10) according to Claim 8, **characterized in that** the magnetic shield (19) is designed
• integrally with a connecting element (16, 18) and/or with the connecting member (12) or as a coating of a connecting element (16, 18) and/or of the connecting member (12), or
• to be insertable as a shielding sleeve into recess (14) or opening (15) and to receive a connecting element (16, 18) and a part of the connecting member (12), or
• to be insertable as a shielding sleeve into a end-to-end opening (24) in a third individual segment (23) which is arranged between the first individual segment (21) and the second individual segment (22) in the assambled state, and to receive a part of the connecting member (12).

10. Connecting system (10) according to any one of the preceding claims, **characterized in that** the magnetic material used for the magnetic elements (30, 30', 30") is neodymium or neodymium compounds.

11. Connecting system (10) according to any one of the preceding claims, **characterized in that** cover-like anti-soiling elements (50) closing recesses (14) or openings (15) in the individual segments (21, 22) are provided for transport purposes, said anti-soiling elements protecting connecting elements (16, 18), in particular after they are fixed in an individual segment (21, 22), against soiling.

12. Disassemblable, assembled unit, in particular from the group comprising: furniture, doors, windows, **characterized in that** said unit is assembled from individual segments (21, 22, 23), in particular from block-like, plate-like and/or bar-like elements and/or fittings, wherein the individual segments (21, 22, 23) each have at least one recess (14) or opening (15) or continuous openings (24) for receiving at least one connecting element (16, 18) and parts of a connecting member (12) of a connecting system (10) according to any one of the preceding claims, and the assembly takes place by means of a connecting system (10) according to any one of Claims 1 to 11.

13. Disassemblable, assembled unit from Claim 12, **characterized in that** the unit is a piece of furniture assembled from individual segments (21, 22, 23), and the individual segments (21, 22, 23) have recesses (14) or openings (15) or continuous openings (24) in a grid customary for the construction of the piece of furniture and with diameters customary for the construction of the piece of furniture.

## Revendications

1. Système de liaison (10) pour la liaison fixe mais amovible de segments individuels (21, 22, 23) d'unités jointes avec :
- un premier élément de liaison (16) enfoncé et pouvant être agencé fixement dans un évidement (14) d'un premier segment individuel (21) ; et avec
- un deuxième élément de liaison (18) enfoncé et pouvant être agencé fixement dans une ouverture (15) d'un deuxième segment individuel (22) ; et avec
- un maillon de liaison (12) également conçu pour un engrènement dans ledit évidement (14) et un engrènement dans ladite ouverture (15), ledit maillon étant réalisé pour être en interaction magnétique avec le premier élément de liaison (16) et avec le deuxième élément de liaison (18), de sorte que le maillon de liaison (12) établisse, avec le premier et le deuxième élément de liaison (16, 18), une liaison magnétique active provoquant une attraction mutuelle entre l'élément de liaison (16, 18) respectif et le maillon de liaison (12) ; sachant que :
- les éléments de liaison (16, 18) ou le maillon de liaison (12) et/ou au moins une partie du maillon de liaison (12) est réalisé sous la forme d'un élément magnétique (30, 30', 30") et que l'autre élément de liaison (16, 18) et/ou le maillon de liaison (12) ou la partie du maillon de liaison (12) interagissant avec lui est soit également un élément magnétique (30, 30', 30") soit un élément magnétisable (34) ;
**caractérisé en ce que** :
- le maillon de liaison (12) comporte entre ses côtés avant magnétiques ou magnétisables une pièce intermédiaire (31) ;
- les côtés avant magnétiques ou magnétisables sont séparés l'un de l'autre par une certaine distance (A) à longueur variable ; et
- la pièce intermédiaire (31) est réalisée de façon à permettre un réglage de la distance variable A entre une longueur minimale et une longueur maximale, la longueur maximale étant supérieure de jusqu'à 15 %, encore mieux de jusqu'à 50 % par rapport à la longueur minimale.

2. Système de liaison (10) selon la revendication 1, **caractérisé en ce que** la longueur du maillon de liaison (12) est dimensionnée de telle sorte dans la direction de liaison qu'après la liaison, les segments individuels (21, 22, 23) puissent être maintenus ensemble sans interstice à l'aide des forces magnétiques, de sorte que le système de liaison (10) soit recouvert une fois la liaison des segments individuels (21, 22, 23) réussie et ne soit pas visible de l'extérieur.

3. Système de liaison (10) selon la revendication 1, **caractérisé en ce que** des moyens de formation de joint sont prévus à l'aide desquels dans l'état joint, les éléments individuels (21, 22, 23) peuvent être maintenus avec un joint de largeur définie entre les éléments individuels (21, 22, 23).

4. Système de liaison (10) selon l'une quelconque des revendications précédentes, **caractérisé en ce que** :
- le maillon de liaison (12) comporte respectivement du côté avant un élément magnetique (30, 30', 30"), les éléments magnétiques (30, 30', 30") de côté avant étant de même polarité et étant séparés les uns des autres par la pièce intermédiaire (31) non magnétique ; et
- le premier élément de liaison (16) étant de même polarité magnétique que le deuxième élément de liaison (18) ; et
- les deux éléments de liaison (16, 18) étant réalisés de polarité magnétique contraire par rapport au maillon de liaison (12).

5. Système de liaison (10) selon la revendication 4, **caractérisé en ce que** le maillon de liaison (12) comporte respectivement au niveau des côtés avant la plus grande puissance de champ magnétique et dans une région centrale la plus faible puissance de champ magnétique, la plus faible puissance de champ magnétique étant de préférence au centre entre les côtés avant et/ou le point d'inversion de polarité étant dans la région de la plus faible puissance de champ magnétique ; la puissance de champ magnétique des côtés avant étant soit réduite par rapport à la région centrale sur certaines sections (30", 30') soit celle-ci comportant un gradient de puissance de champ magnétique (A, B) continu.

6. Système de liaison (10) selon l'une quelconque des revendications précédentes, **caractérisé en ce que** le maillon de liaison (12) et/ou le premier élément de liaison (16) et/ou le deuxième élément de liaison (18) est pourvu d'une couche anticorrosion (52).

7. Système de liaison (10) selon la revendication 6, **caractérisé en ce que** la couche anticorrosion (52) est un revêtement plastique, un vernis ou un revêtement métallique, notamment une couche d'étain sans pores.

8. Système de liaison (10) selon l'une quelconque des revendications précédentes, **caractérisé en ce qu'**un écran magnétique (19) est prévu empêchant à l'état assemblé des segments individuels (21, 22, 23) une sortie du champ magnétique hors des segments individuels (21, 22, 23).

9. Système de liaison (10) selon la revendication 8, **caractérisé en ce que** l'écran magnétique (19) :
- est réalisé d'un seul tenant avec un élément de liaison (16, 18) et/ou le maillon de liaison (12) et/ou sous la forme d'un revêtement d'un élément de liaison (16, 18) et/ou du maillon de liaison (12) ; ou
- peut être inséré sous la forme d'une douille de protection dans l'évidement (14) et/ou l'ouverture (15) et un élément de liaison (16, 18) et de façon à recevoir une partie du maillon de liaison (12) ; ou
- peut être inséré sous la forme d'une douille de protection dans une ouverture (24) traversante d'un troisième segment individuel (23) disposé à l'état assemblé entre le premier segment individuel (21) et le deuxième segment individuel (22) et recevant une partie du maillon de liaison (12).

10. Système de liaison (10) selon l'une quelconque des revendications précédentes, **caractérisé en ce que** la matière magnétique utilisée pour les éléments magnétiques (30, 30', 30") est le néodyme ou les liaisons en néodyme.

11. Système de liaison (10) selon l'une quelconque des revendications précédentes, **caractérisé en ce que** pour le transport, des évidements (14) et/ou des ouvertures (15) de type couvercle sont prévus dans les segments individuels (21, 22) avec des éléments antisaletés (50), lesdits éléments protégeant des saletés les éléments de liaison (16, 18), notamment après leur fixation dans un segment individuel (21, 22).

12. Unité jointe démontable, notamment appartenant au groupe comprenant : les meubles, portes, fenêtres, **caractérisée en ce qu'**elle est jointe à partir de segments individuels (21, 22, 23), notamment à partir d'éléments et/ou de ferrures de type bloc, de type plaque et/ou de type barre, les segments individuels (21, 22, 23) comportant respectivement au moins un évidement (14) et/ou une ouverture (15) et/ou des ouvertures (24) traversantes pour recevoir au moins un élément de liaison (16, 18) et les parties d'un maillon de liaison (12) d'un système de liaison (10) selon l'une quelconque des revendications précédentes et étant jointes à l'aide d'un système de liaison (10) selon l'une quelconque des revendications 1 à 11.

13. Unité jointe démontable selon la revendication 12, **caractérisée en ce que** l'unité comporte un meuble joint à partir de segments individuels (21, 22, 23) et les segments individuels (21, 22, 23) comportant des évidements (14) et/ou des ouvertures (15) et/ou des ouvertures (24) traversantes dans un cadre courant dans l'ameublement et avec des diamètres courants dans l'ameublement.
